Europäisches Patentamt

European Patent Office

Office européen des brevets

(11) Numéro de publication: **0 364 645**
**A1**

## DEMANDE DE BREVET EUROPEEN

(21) Numéro de dépôt: 88402644.4

(22) Date de dépôt: **20.10.88**

(51) Int. Cl.⁵: **G01G 7/04 , G01G 23/16**

(43) Date de publication de la demande:
**25.04.90 Bulletin 90/17**

(84) Etats contractants désignés:
**AT BE CH DE ES GB GR IT LI LU NL SE**

(71) Demandeur: **SAVIPHAR S.A.R.L.**
**"Les Gibaults" Savigny en Sancerre**
**F-18240 Lere(FR)**

(72) Inventeur: **Pliskine, Robert**
**Place du Champ de Foire Savigny en**
**Sancerre**
**F-18240 Lere(FR)**

(74) Mandataire: **Chameroy, Claude et al**
**c/o Cabinet Malemont 42, avenue du**
**Président Wilson**
**F-75116 Paris(FR)**

(54) **Dynamomètre à tarage électromagnétique.**

(57) Dynamomètre à tarage électromagnétique, du type dans lequel on compense la force à mesurer en envoyant un courant dans un bobinage solidaire du bras mobile et associé à un aimant fixe, (comprenant) deux bobinages distincts (11, 12) affectés respectivement au tarage et à la mesure proprement dite, ces deux bobinages (11, 12) étant associés chacun à un aimant (13, 14) également distinct.

FIG.2

EP 0 364 645 A1

## Dynamomètre à tarage électromagnétique

La présente invention concerne un dynamomètre à tarage électromagnétique, du type dans lequel on compense la force à mesurer en envoyant un courant dans un bobinage solidaire du bras mobile et associé à un aimant fixe.

Les appareils de mesure ont tous une gamme de lecture limitée, soit parce que l'organe de lecture a une étendue limitée, soit parce que, ces appareils usant de méthodes de zéro, la compensation du phénomène à mesurer est limitée.

Ce problème est particulièrement aigu dans les dynamomètres ou balances électroniques, puisqu'il s'agit de mesurer de faibles différences par rapport à une référence. Lorsque le point de référence, ou zéro relatif, est situé au-delà de l'étendue de mesure nominale, on doit utiliser des méthodes de décalage du zéro, c'est-à-dire de tarage.

La méthode de tarage la plus classique est l'utilisation d'un contrepoids. Toutefois, celle-ci ne peut s'appliquer qu'à la mesure de forces verticales, essentiellement des poids. De plus, le contrepoids provoque une usure des points d'articulation et augmente la masse dynamique du fléau, ce qui est préjudiciable au temps de mesure et à la sensibilité aux accélérations.

Une autre méthode de tarage bien connue, fréquemment utilisée sur les dynamomètres, est le tarage par ressort. Cependant, une faible variation de la longueur du ressort ou de la position de ses points d'ancrage provoque d'importantes variations de tare, de sorte que le tarage n'est pas stable. De plus, le ressort constitue un excellent résonateur pour les vibrations, ce qui augmente l'instabilité de l'appareil en milieu vibratoire.

Enfin, on connaît également le tarage électromagnétique, qui ne présente pas les inconvénients des deux méthodes ci-dessus, mais qui souffre de limitations qui en ont diminué la diffusion. En effet, l'envoi d'un courant continu fort dans le bobinage de rattrapage de zéro crée un champ magnétique qui en se superposant à celui de l'aimant, le fausse. Dans ces conditions, on n'a donc pas un champ magnétique constant, ni linéaire. Par ailleurs, la stabilité de la tare est fonction de celle du générateur de courant qui alimente le bobinage de rattrapage de zéro. Pour qu'un tarage électromagnétique de 10 g par exemple, ne perturbe pas la mesure d'un dynamomètre au mg, il faut que la stabilité du tarage soit d'au moins 1/10.000, ce qui est très difficile à réaliser.  -

La présente invention a donc pour but principal de remédier à ces inconvénients et, pour ce faire, elle a pour objet un dynamomètre à tarage électromagnétique qui se caractérise essentiellement en ce qu'il comprend deux bobinages distincts affectés respectivement au tarage et à la mesure proprement dite, ces deux bobinages étant associés chacun à un aimant également distinct.

Dans une forme de réalisation particulière de l'invention, les deux bobinages sont juxtaposés sur un même support solidaire du bras mobile, perpendiculairement à celui-ci.

De préférence, le bobinage affecté au tarage est situé le plus près du bras mobile, en vue d'éviter le flambage du support.

De plus, les deux aimants sont isolés magnétiquement l'un de l'autre par un blindage.

Grâce à cet ensemble de dispositions, on évite toute interaction entre les champs magnétiques des deux aimants et donc toute influence du tarage sur la mesure proprement dite. Par ailleurs, on n'a pas besoin d'un générateur de courant de tare qui soit stable, puisqu'il suffit de mesurer la valeur de la tare au moment de la mesure proprement dite et de faire la somme des deux pour avoir la valeur de la grandeur à mesurer.

Une forme d'exécution de l'invention est décrite ci-après à titre d'exemple, en référence aux dessins annexés dans lesquels :

- la figure 1 est une vue schématique en perspective d'un dynamomètre électronique classique de l'art antérieur,

- la figure 2 est une vue simplifiée en perspective partielle d'un dynamomètre à tarage électromagnétique conforme à l'invention ; et

- la figure 3 est une vue de face selon la flèche A de la figure 2.

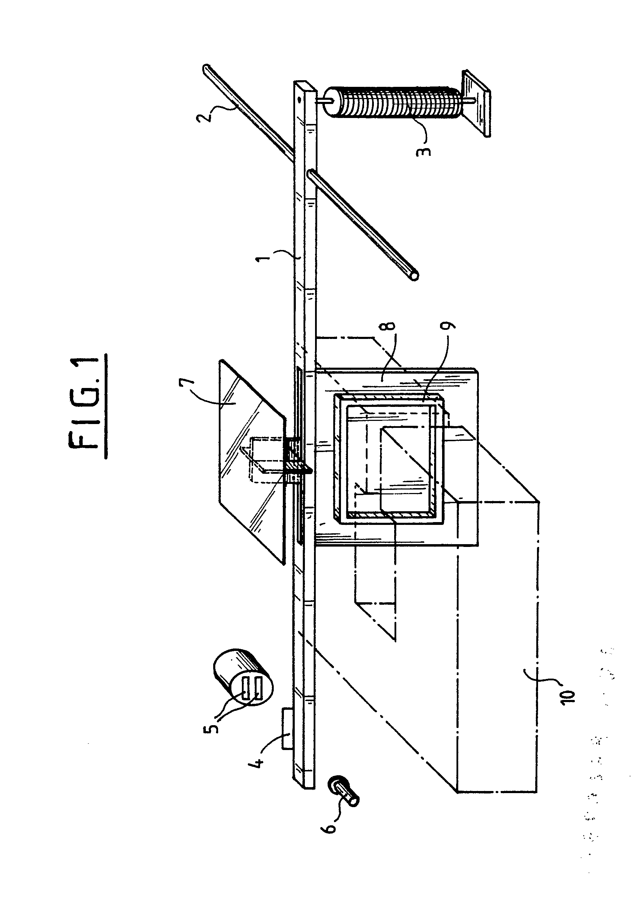

Le dynamomètre électronique représenté sur la figure 1 est utilisé en tant que balance et comprend, de façon connue en soi, un bras mobile 1 supporté par une suspension 2 et dont une extrémité est reliée à un ressort 3 tandis que l'autre extrémité comporte un détecteur de zéro constitué ici par un occultateur 4 coopérant avec deux cellules photoélectriques fixes 5 éclairées par une lampe 6. Sur le bras mobile 1 est fixé un plateau 7 destiné à recevoir la charge à mesurer. En dessous se trouve un support 8 pour un bobinage 9 disposé dans le champ magnétique d'un aimant permanent 10.

Le fonctionnement d'un tel dynamomètre est bien connu et ne sera donc pas décrit en détail ici. On rappellera simplement qu'il s'agit d'un appareil de zéro dans lequel on compense la force à mesurer, en l'occurrence un poids, en envoyant un courant dans le bobinage 9. Le zéro est vérifié par la mise en équilibre d'un pont de Wheatstone incluant dans ses branches les deux cellules photoélectriques 5, tandis que dans l'une des diagonales de ce pont se trouve un amplificateur fournissant au bobinage 9 le courant de rattrapage nécessaire, dont la valeur est représentative de la charge à mesurer. Ce courant est mesuré par exemple au moyen d'un convertisseur analogique/numérique susceptible d'être relié à un ordinateur.

La balance ainsi constituée a naturellement une gamme de lecture limitée et son tarage présente de nombreuses difficultés, comme on l'a vu plus haut.

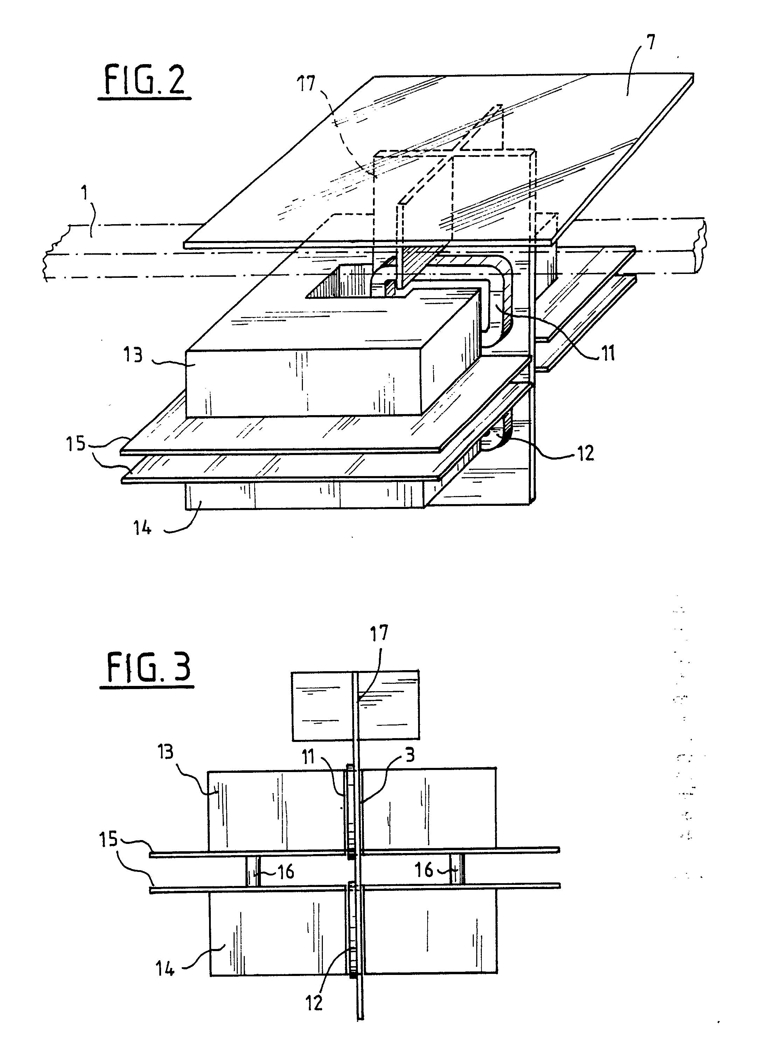

Dans la balance conforme à l'invention, représentée sur les figures 2 et 3, identique par aileurs à celle représentée sur la figure 1, on a prévu deux bobinages distincts 11 et 12, affectés l'un à la mesure proprement dite, c'est-à-dire au rattrapage du zéro, et l'autre au tarage. Ces deux bobinages sont associés chacun à un aimant également distinct, respectivement 13 et 14. De plus, les deux aimants sont isolés magnétiquement l'un de l'autre par des blindages en lame de fer 15 séparés par des entretoises 16.

Dans l'exemple de réalisation particulier décrit ici, les deux bobinages 11 et 12 sont fixés par une même plaque-support 17 en aluminium et sont juxtaposés verticalement, de manière que la tare pousse dans le sens inverse de la force à mesurer et ne charge pas davantage la suspension. On peut ainsi réaliser des tares élevées sur des balances à suspension fragile, mais qui sont par ailleurs sensibles.

En outre, le bobinage supérieur 11 est de préférence celui qui est affecté au tarage. Il tire ainsi le bobinage de mesure 12 et supporte directement la force à mesurer. Cette disposition est donc adaptée aux fortes charges.

Toutefois, il est également concevable de placer le bobinage de tarage en bas. Cette disposition est plus sensible au flambage, mais présente l'avantage de permettre de transformer facilement une balance classique telle que celle représentée sur la figure 1 en balance conforme à l'invention. Il suffit en effet pour cela de rajouter une plaque supportant le bobinage de tarage et de la rendre solidaire de la plaque d'origine 8, par exemple au moyen de deux tubes d'aluminium enserrant les deux plaques sur les côtés. On obtient ainsi un ensemble suffisamment rigide et néanmoins léger, qui n'augmentera donc pas beaucoup la masse dynamique.

Selon les options, le courant circule, soit dans un fil bobiné sur la surface de la plaque 17, soit dans un fil bobiné sur deux ou trois spires dans une rainure en spirale ménagée directement dans la plaque d'aluminium 17. La première version permet de travailler avec des tensions élevées et des courants faibles, tandis que la seconde permet de travailler avec des tensions faibles et des courants élevés, dont avec des champs magnétiques plus forts.

Conformément à l'invention, il n'est pas nécessaire d'avoir un courant de tare stable, ni même permanent. On procède en effet pour la tare de façon analogue à la mesure de force décrite plus haut en référence à la figure 1.

Pour le tarage, on crée une force en envoyant un courant connu dans le bobinage de tarage 11 au moyen d'un convertisseur numérique/analogique. On procède par séquences très rapides, en augmentant l'intensité du courant par degrés égaux à l'étendue de mesure du bobinage de mesure 12. Si ce bobinage de mesure est dans sa gamme de travail, on arrête d'augmenter la tare. S'il est en surcharge (tare insuffisante), on augmente la tare d'un degré, tandis que s'il est en sous-charge (tare excessive) on redescend d'un degré. Lorsque l'on fait des mesures répétitives, par exemple pour le contrôle pondéral de qualité, on peut envoyer directement la tare correspondant à la mesure précédente, ce qui permet un gain de temps appréciable.

La force inconnue est donc mesurée dans un temps très court, au moment où le tarage est arrivé dans une zone où la lecture normale peut s'effectuer. Au même moment, on lit la tare et la mesure de force (la tare est connue par la valeur injectée dans le convertisseur numérique/analogique, et la force par la lecture du convertisseur analogique/numérique). La force inconnue a donc pour mesure la somme du courant de tare et celle du courant de mesure.

Comme il suffit de moins de 1/10 de seconde pour lire le courant de mesure, et moins encore pour injecter le courant de tare, il n'est pas nécessaire d'avoir le courant en permanence, mais seulement au moment de la lecture, ce qui permet d'injecter des courants forts dans des bobinages de faible diamètre. Le "flash" thermique qui en résulte est absorbé, d'une part par la masse de cuivre du bobinage, d'autre part, par conduction, par la plaque d'aluminium 17 qui porte ce bobinage, en particulier lorsque les bobinages sont intégrés dans un sillon gravé sur ladite plaque support.

On supprime ainsi la limitation de force de la tare due à la limitation du courant admissible, ce qui permet d'atteindre des forces de plusieurs dizaines de kilos.

En outre, comme on mesure simultanément la tare et le rattrapage de zéro, il n'est plus nécessaire d'avoir un générateur de courant stable. C'est en effet la valeur instantanée de ces deux valeurs qui est prise en compte.

Par ailleurs, comme on utilise deux bobinages indépendants 11 et 12, mobiles dans deux champs magnétiques indépendants et qui sont alimentés par deux générateurs de courant également indépendants, les réactions entre ces deux bobinages sont pratiquement négligeables.

Le système de tarage et de mesure à la volée conforme à l'invention permet donc en définitive d'augmenter la capacité des micro-balances au moyen d'un décalage d'origine n'influant pas sur l'inertie de l'ensemble et également d'augmenter la vitesse de mesure. Cette vitesse est due non seulement à la technique de rattrapage de zéro, mais aussi au freinage magnétique inhérent à cette technique.

En effet, lorsqu'une force est appliquée brutalement à l'équipage mobile (plateau), celui-ci tend à se déplacer. Non seulement l'ensemble de mesure réagit très vite, mais en plus le déplacement rapide du bras mobile sous la charge appliquée induit dans les masses d'aluminium du support 17 des courants de Foucault forts, qui freinent le déplacement.

Tout cela concourt à obtenir une stabilisation très rapide, quelques dizièmes de secondes, et une mesure également très rapide. Il s'agit donc là d'un outil adapté aux pesées automatiques à grande vitesse, telles que celles qui existent dans le contrôle pondéral de qualité.

## Revendications

1. Dynamomètre à tarage électromagnétique, du type dans lequel on compense la force à mesurer en envoyant un courant dans un bobinage solidaire du bras mobile et associé à un aimant fixe, caractérisé en ce qu'il comprend deux bobinages distincts (11, 12) affectés respectivement au tarage et à la mesure proprement dite, ces deux bobinages (11, 12) étant associés chacun à un aimant (13, 14) également distinct.

2. Dynamomètre selon la revendication 1, caractérisé en ce que les deux bobinages (11, 12) sont juxtaposés sur un même support (17) solidaire du bras mobile (1), perpendiculairement à celui-ci.

3. Dynamomètre selon la revendication 2, caractérisé en ce que le bobinage (11) affecté au tarage est situé le plus près du bras mobile (1).

4. Dynamomètre selon la revendication 2 ou 3, caractérisé en ce que les deux aimants (13, 14) sont isolés magnétiquement l'un de l'autre par un blindage (15).

# FIG. 1

EP 0 364 645 A1

## FIG. 2

## FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| Y | US-A-4 373 596 (P. KUNZ)<br>* Résumé; colonne 1, lignes 46-50; colonne 2, ligne 60 - colonne 3, ligne 9; colonne 4, lignes 57-65; figure 1 * | 1,2 | G 01 G 7/04<br>G 01 G 23/16 |
| A | | 4 | |
| Y | GB-A-1 571 785 (PA MANAGEMENT CONSULTANTS LTD)<br>* Page 1, lignes 53-73; page 2, lignes 41-59; figure 3 * | 1,2 | |
| A | EP-A-0 206 333 (DATAPROCESS S.p.A. - ITALORA S.p.A.)<br>* Page 5, lignes 9-15; figure 1 * | 1 | |
| A | MESURES, vol. 52, no. 8, 26 mai 1987, pages 55-57,59, Paris, FR; "Peser 500 mg à 0,1 mg 80 fois par minute, c'est possible"<br>* Page 57, colonne de gauche, ligne 45 - colonne de droite, ligne 4; figure * | 1 | |

DOMAINES TECHNIQUES RECHERCHES (Int. Cl.3)

G 01 G
G 01 L

Le présent rapport a été établi pour toutes les revendications

| Lieu de la recherche | Date d'achèvement de la recherche | Examinateur |
|---|---|---|
| LA HAYE | 09-06-1989 | GANCI P.A. |